# EUROPEAN PATENT APPLICATION

(11) **EP 4 738 468 A1**
(43) Date of publication of application: **06.05.2026**
(21) Application number: 24832434.5
(22) Date of filing: 26.06.2024
(51) Int. Cl.: H01M 4/525, H01M 4/505, H01M 4/131, H01M 10/052, H01M 4/02

(54) **CATHODE ACTIVE MATERIAL FOR LITHIUM SECONDARY BATTERY AND LITHIUM SECONDARY BATTERY COMPRISING SAME**

(30) Priority: 27.06.2023 KR 20230082784
(71) Applicant: Posco Future M Co., Ltd., Pohang-si, Gyeongsangbuk-do 37918 (KR)
(72) Inventor: LEE, Subin, Pohang-si, Gyeongsangbuk-do 37918 (KR); MYUNG, Minhoon, Pohang-si, Gyeongsangbuk-do 37918 (KR); SIM, Sung Keun, Pohang-si, Gyeongsangbuk-do 37918 (KR); LEE, Seungwon, Pohang-si, Gyeongsangbuk-do 37918 (KR); CHOI, Kwonyoung, Pohang-si, Gyeongsangbuk-do 37918 (KR)
(74) Representative: Meissner Bolte Partnerschaft mbB
(86) International application number: PCT/KR2024/008906
(87) International publication number: WO 2025/005656

(57) **Abstract**

The present embodiments relate to a positive electrode active material for a lithium secondary battery and a lithium secondary battery including the same. A positive electrode active material for a lithium secondary battery according to one embodiment includes a nickel-containing metal oxide in a single-particle form and a doping element doped into the nickel-containing metal oxide, wherein the doping element may include Al, Y, and Zr.

## Description

### [Technical Field]

The present embodiments relate to a positive electrode active material for a lithium secondary battery and a lithium secondary battery including the same.

### [Background Art]

Recently, driven by the explosive demand for electric vehicles and the increasing need for longer driving ranges, the development of secondary batteries having high capacity and high energy density has been actively pursued worldwide. In particular, to satisfy such demands, high-nickel NCM positive electrode materials have been widely employed.

However, as the nickel content increases, the particle strength decreases, resulting in the generation of microcracks during charge and discharge. In addition, the specific surface area of the positive electrode material increases, which increases reactions with the electrolyte, thereby causing an increase in gas generation. Further, due to structural instability, unstable Ni³⁺ is reduced to stable Ni²⁺ and converts into stable NiO, thereby increasing cation mixing. Accordingly, applying such materials as positive electrode active materials for lithium-ion batteries used in electric vehicles or energy-storage systems is difficult.

To address these issues, approaches have been proposed in which the positive electrode material is manufactured not in a multi-particle structure, i.e., secondary particles formed by agglomerated primary particles, but instead in a single-particle form in which the size of the primary particle is maximized.

However, to manufacture a positive electrode material in a single-particle form, calcination must generally be performed at a higher temperature compared to multi-particle systems. In such cases, over-sintering frequently occurs, causing defects in the layered crystal structure, which deteriorates electrochemical characteristics such as capacity and output, and increases resistance.

### [Detailed Description of the Invention]

### [Technical Problem]

The present embodiments aim to provide a positive electrode active material for a lithium secondary battery that exhibits excellent electrochemical performance while also providing improved lifespan and resistance characteristics, and having superior particle strength. A lithium secondary battery including the same is also provided.

### [Technical Solution]

According to one embodiment, a positive electrode active material for a lithium secondary battery includes a nickel-containing metal oxide in a single-particle form and a doping element doped into the nickel-containing metal oxide, wherein the doping element may include Al, Y, and Zr.

According to another embodiment, a positive electrode for a lithium secondary battery may include the positive electrode active material according to the one embodiment.

According to still another embodiment, a lithium secondary battery may include the positive electrode for a lithium secondary battery according to the one embodiment.

### [Effects of the Invention]

According to the present embodiments, by doping at least three doping elements-specifically Al, Y, and Zr-into a nickel-containing metal oxide in a single-particle form, the crystal structure can be stabilized and the particle strength can be improved.

Accordingly, the present embodiments enable the realization of a positive electrode active material in a single-particle form that exhibits excellent electrochemical performance and improved lifespan and resistance characteristics.

### [Mode for Carrying Out the Invention]

The terms "first," "second," "third," and the like used herein are employed to describe various parts, components, regions, layers, and/or sections but are not limited thereto. These terms are only used to distinguish one part, component, region, layer, or section from another. Therefore, the first part, component, region, layer, or section described below may be referred to as the second part, component, region, layer, or section without departing from the scope of the present invention.

Technical terminology used herein is intended only to describe specific embodiments and is not intended to limit the present invention. Singular forms used herein include plural forms unless the context clearly indicates otherwise. The term "comprising/including/containing" as used in the specification specifies the presence of stated features, regions, integers, steps, operations, elements, and/or components, but does not preclude the presence or addition of other features, regions, integers, steps, operations, elements, and/or components.

When a portion is described as being "on" or "over/above" another portion, it may be directly on or over the other portion, or intervening portions may be present therebetween. In contrast, when a portion is described as being "directly on" another portion, no intervening portion exists therebetween.

Unless otherwise defined, all terms including technical and scientific terms used herein have the same meanings as commonly understood by those skilled in the art to which this invention pertains. Terms defined in commonly used dictionaries are to be interpreted consistently with the context of the relevant technical field and the present disclosure, and are not to be interpreted in an idealized or overly formal sense unless expressly defined otherwise.

Unless specifically stated otherwise, "%" refers to weight percent (wt%), and 1 ppm refers to 0.0001 wt%.

In the present specification, the term "combinations thereof" appearing in Markush-type expressions refers to mixtures or combinations of one or more components selected from the group consisting of the listed elements, meaning that any single element or combination of two or more elements selected from the group is included.

Hereinafter, embodiments of the present invention will be described in detail so that those skilled in the art may easily practice the invention. However, the present invention may be embodied in various different forms and is not limited to the embodiments described herein.

### Positive Electrode Active Material for a Lithium Secondary Battery

As described above, when a positive electrode active material is prepared in a single-particle form, over-sintering may occur, causing defects in the layered crystal structure, which leads to deterioration in high-temperature lifespan and resistance characteristics.

However, in the present embodiments, these issues were solved by doping a metal oxide using at least three types of doping elements.

Specifically, a positive electrode active material for a lithium secondary battery according to one embodiment includes a nickel-containing metal oxide in a single-particle form and a doping element doped into the nickel-containing metal oxide, wherein the doping element may include Al, Y, and Zr.

In the present specification, the term "single particle" may refer to any one of a single-crystal structure composed of one particle, and a structure in which 2 to 20 particles, or 2 to 10 particles, are agglomerated such that the cross-section of the powder observed through scanning electron microscopy (SEM) is distinguished as a single mass. Here, one particle refers to a single grain or crystallite.

As in the present embodiments, the single-particle-form active material has a smaller specific surface area compared to conventional secondary-particle positive electrode active materials formed by agglomeration of several tens to several hundreds of primary particles, thereby reducing gas generation due to side reactions with the electrolyte. Moreover, the particle strength increases, making it possible to suppress particle breakage during rolling, and crack formation caused by repeated charging and discharging can be reduced. Accordingly, compared with secondary particles, the single-particle structure provides excellent lifespan and safety characteristics, and enables implementation of high energy density in the electrode.

However, as described above, to manufacture a positive electrode active material in a single-particle form, calcination must generally be performed at a higher temperature compared to the secondary-particle process. In such cases, over-sintering frequently occurs, causing defects in the layered crystal structure.

In the present embodiments, by doping the nickel-containing metal oxide with at least three types of doping elements including Al, Y, and Zr, crystal defects such as increased cation mixing caused by high-temperature calcination can be prevented, and the crystallite size within the single particle and the average particle size of the single particle can be efficiently increased during calcination.

In the present specification, "crystallite" refers to a distinct region within a primary particle in which atoms form a lattice structure in a particular orientation.

In the present embodiments, the content of Al may be from 200 ppm to 1,800 ppm, and more specifically from 500 ppm to 1,500 ppm, based on the total amount of the nickel-containing metal oxide. When the content of Al satisfies the above range, degradation of the layered structure into a spinel structure can be effectively suppressed. The layered structure allows smooth delithiation and lithiation, whereas in the spinel structure lithium-ion mobility is hindered. Therefore, suppressing deterioration of the layered structure improves lithium-ion mobility and ultimately improves the electrochemical characteristics of the battery.

The content of Y may be from 400 ppm to 2,000 ppm, and more specifically from 700 ppm to 1,700 ppm, based on the total amount of the nickel-containing metal oxide. When the content of Y satisfies the above range, grain growth is promoted, thereby efficiently increasing the crystallite size within the single particle and the average particle size of the single particle. Since the degree of single-particle formation increases, particle strength can also be improved.

The content of Zr may be from 1,200 ppm to 2,800 ppm, and more specifically from 1,500 ppm to 2,500 ppm, based on the total amount of the doped nickel-containing metal oxide. When the content of Zr satisfies the above range, contraction of the lithium-ion diffusion path during charging and discharging can be alleviated, which stabilizes the layered structure. Consequently, the cation mixing ratio can be reduced, and the resistance and lifespan characteristics can be improved.

In the present embodiments, the cation mixing ratio of nickel cations in the lithium layer of the crystal structure of the doped nickel-containing metal oxide may be 1.5% or less, and more specifically from 0.8% to 1.2%, or from 0.69% to 1.1%. When the cation mixing ratio satisfies the above range, excellent resistance characteristics and lifespan characteristics can be achieved.

Meanwhile, in the nickel-containing metal oxide of the present embodiments, the content of nickel may be 0.8 mol or more, and more specifically from 0.8 mol to 0.99 mol, from 0.82 mol to 0.95 mol, or from 0.82 mol to 0.93 mol, based on a total of 1 mol of transition metals contained in the doped nickel-containing metal oxide. When the content of nickel satisfies the above range, a high-capacity battery can be realized.

The nickel-containing metal oxide may further include cobalt, and the content of cobalt may be 0.06 mol or less, and more specifically greater than 0 and 0.06 mol or less, based on a total of 1 mol of transition metals contained in the doped nickel-containing metal oxide.

The nickel-containing metal oxide may further include manganese, and the content of manganese may be 0.15 mol or less, and more specifically from 0.05 mol to 0.1 mol, based on a total of 1 mol of transition metals contained in the doped nickel-containing metal oxide.

More specifically, the nickel-containing metal oxide may be represented by Chemical Formula 1 below.

[Chemical Formula 1] Liₐ[NiₓCo_{γ}Mn_{z}M_{1_{W1}}M_{2_{W2}}]O₂

In Chemical Formula 1, 0.8 ≤ a ≤ 1.2, 0.8 ≤ x ≤ 0.99, 0 < y ≤ 0.06, 0 < z ≤ 0.14, 0 < w₁ ≤ 0.1, 0 ≤ w₂ ≤ 0.05, and x + y + z + w₁ + w₂ = 1, where M₁ is Al, Y, and Zr, and M₂ comprises one or more selected from B, Al, Mg, Ti, Nb, W, Sc, Si, V, Fe, Y, Mo, Ce, Hf, Ta, La, and Sr.

In Chemical Formula 1, the total content of the doping elements M₁ and M₂ may be greater than 0 and 0.2 mol or less, and more specifically from 0.0005 mol to 0.1 mol, 0.0005 mol to 0.08 mol, 0.0005 mol to 0.04 mol, or 0.001 mol to 0.03 mol, based on a total of 1 mol of nickel, cobalt, manganese, and doping elements. The content of doping elements in the chemical formula refers to the amount of doping elements included in the finally obtained positive electrode active material.

Meanwhile, an average particle diameter (D50) of the positive electrode active material according to the present embodiments may be 3 µm or more, and more specifically from 3 µm to 6 µm. When the average particle diameter of the single-particle-form positive electrode active material satisfies the above range, a lithium secondary battery having excellent electrochemical characteristics such as lifespan characteristics and resistance increase rate can be realized. In addition, since volumetric energy density can also be increased, very advantageous effects can be obtained.

The positive electrode active material of the present embodiments has a very low fine-particle generation rate. Specifically, when the positive electrode active material is subjected to five pressurizations using a roll press at a press gauge of 0.01 mm, the total amount of fine particles having a size of less than 1 µm may be 2% or less. When the fine-particle generation rate satisfies the above range, high-temperature lifespan characteristics and resistance characteristics can be improved.

Further, the peak temperature obtained through differential scanning calorimetry (DSC) analysis of the positive electrode active material of the present embodiments may be 230°C or higher, and more specifically from 230°C to 280°C.

### Positive Electrode

In another embodiment, a positive electrode includes a current collector and a positive electrode active material layer positioned on one surface of the current collector, the positive electrode active material layer including the positive electrode active material prepared according to the above-described embodiment.

The characteristics of the positive electrode active material constituting the positive electrode active material layer are the same as described above. Accordingly, a detailed description of the positive electrode active material will be omitted.

The current collector may include, for example, stainless steel, aluminum, nickel, titanium, calcined carbon, or aluminum or stainless steel whose surface is coated with carbon, nickel, titanium, silver, or the like.

Meanwhile, the positive electrode active material layer may include a binder and a conductive agent.

The binder serves to increase the adhesion between the positive electrode active material particles and the adhesion between the positive electrode active material and the positive electrode current collector. Specific examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and one or more of these may be used, but the present invention is not limited thereto. The binder may be included in an amount of 1 to 30 wt% based on the total weight of the positive electrode active material layer.

The conductive agent is used to impart conductivity to the electrode, and any material having electronic conductivity without causing chemical changes in the battery may be used without particular limitation. Specific examples include graphite such as natural graphite or artificial graphite; carbon materials such as carbon black, acetylene black, Ketjen black, channel black, furnace black, lamp black, thermal black, and carbon fibers; metal powders or metal fibers of copper, nickel, aluminum, or silver; conductive whiskers such as zinc oxide or potassium titanate; conductive metal oxides such as titanium oxide; or conductive polymers such as polyphenylene derivatives. One or more of these may be used, but the present invention is not limited thereto. The conductive agent is typically included in an amount of 1 to 30 wt% based on the total weight of the positive electrode active material layer.

Except for using the above-described positive electrode active material, the positive electrode may be manufactured by a conventional positive electrode fabrication method.

Specifically, the positive electrode may be manufactured by applying a positive electrode active material layer-forming composition including the above-described positive electrode active material and, optionally, a binder, conductive agent, or solvent, onto the positive electrode current collector, followed by drying and rolling. The types and amounts of the positive electrode active material, binder, and conductive agent are the same as described above.

The solvent may be any solvent generally used in the relevant technical field, and examples thereof include dimethyl sulfoxide (DMSO), isopropyl alcohol, N-methyl-2-pyrrolidone (NMP), acetone, or water, and one or more of these may be used. The amount of solvent used only needs to be sufficient to dissolve or disperse the positive electrode active material, conductive agent, and binder and to provide a viscosity that ensures excellent coating uniformity during the positive electrode fabrication process while taking into account the coating thickness and manufacturing yield.

In another method, the positive electrode may be manufactured by casting the positive electrode active material layer-forming composition onto a separate support, peeling off the resulting film from the support, and laminating the film onto the positive electrode current collector.

### Lithium Secondary Battery

In another embodiment, a lithium secondary battery including the above-described positive electrode is provided.

The lithium secondary battery may specifically include a positive electrode, a negative electrode positioned to face the positive electrode, a separator interposed between the positive electrode and the negative electrode, and an electrolyte, and the positive electrode is as described above. In addition, the lithium secondary battery may further optionally include a battery case that accommodates an electrode assembly including the positive electrode, the negative electrode, and the separator, and a sealing member that seals the battery case.

In the lithium secondary battery, the negative electrode may include a negative electrode current collector and a negative electrode active material layer positioned on the negative electrode current collector.

The negative electrode current collector is not particularly limited so long as it has high conductivity without causing chemical changes in the battery. For example, copper, stainless steel, aluminum, nickel, titanium, calcined carbon, copper or stainless steel whose surface is coated with carbon, nickel, titanium, or silver, or aluminum-cadmium alloys may be used. The negative electrode current collector may generally have a thickness of 3 to 500 µm, and similar to the positive electrode current collector, micro-roughness may be formed on the surface of the current collector to enhance adhesion of the negative electrode active material. The current collector may be used in various forms such as a film, sheet, foil, net, porous body, foam, or nonwoven fabric.

The negative electrode active material layer may include a negative electrode active material and may optionally include a binder and a conductive agent. For example, the negative electrode active material layer may be prepared by applying and drying a negative electrode active material layer-forming composition including the negative electrode active material and optionally including a binder and a conductive agent onto the negative electrode current collector, or by casting the negative electrode active material layer-forming composition onto a separate support, peeling a film obtained therefrom, and laminating the film on the negative electrode current collector.

The negative electrode active material may be a compound capable of reversible intercalation and deintercalation of lithium. Specific examples include carbon-based materials such as artificial graphite, natural graphite, graphitized carbon fibers, or amorphous carbon; metal-based compounds capable of alloying with lithium such as Si, Al, Sn, Pb, Zn, Bi, In, Mg, Ga, Cd, silicon alloys, tin alloys, or aluminum alloys; metal oxides capable of doping and de-doping lithium such as SiOβ (0 < β < 2), SnO₂, vanadium oxides, or lithium vanadium oxides; or composites including the metal-based compounds and carbon materials, such as Si-C composites or Sn-C composites. Any one or a mixture of two or more of these may be used. In addition, a lithium metal thin film may be used as the negative electrode active material. Carbon materials may include both low-crystallinity and high-crystallinity carbon. Representative examples of low-crystallinity carbon include soft carbon and hard carbon. Representative examples of high-crystallinity carbon include natural or artificial graphite that is amorphous, plate-shaped, flake-shaped, spherical, or fibrous; Kish graphite; pyrolytic carbon; mesophase pitch-based carbon fibers; meso-carbon microbeads; mesophase pitches; and high-temperature calcined carbons derived from petroleum or coal tar pitch.

The binder and conductive agent may be the same as those described above for the positive electrode.

Next, depending on the type of the lithium secondary battery, a separator may be provided between the positive electrode and the negative electrode. As such a separator, polyethylene, polypropylene, polyvinylidene fluoride, or multilayer films having two or more layers thereof may be used, and mixed multilayer membranes such as polyethylene/polypropylene two-layer separators, polyethylene/polypropylene/polyethylene three-layer separators, or polypropylene/polyethylene/polypropylene three-layer separators may also be used.

In addition, in the lithium secondary battery, the electrolyte may include any of the organic liquid electrolytes, inorganic liquid electrolytes, solid polymer electrolytes, gel-type polymer electrolytes, solid inorganic electrolytes, or molten inorganic electrolytes that can be used in manufacturing lithium secondary batteries, without limitation.

Specifically, the organic liquid electrolyte may include an organic solvent and a lithium salt.

The organic solvent may be any solvent that can serve as a medium through which ions involved in the electrochemical reactions of the battery can move, without particular limitation. Specific examples include ester solvents such as methyl acetate, ethyl acetate, γ-butyrolactone, or ε-caprolactone; ether solvents such as dibutyl ether or tetrahydrofuran; ketone solvents such as cyclohexanone; aromatic hydrocarbon solvents such as benzene or fluorobenzene; carbonate solvents such as dimethyl carbonate (DMC), diethyl carbonate (DEC), methyl ethyl carbonate (MEC), ethyl methyl carbonate (EMC), ethylene carbonate (EC), or propylene carbonate (PC); alcohol solvents such as ethyl alcohol or isopropyl alcohol; nitriles of the formula R-CN (where R is a C₂-C₂₀ linear, branched, or cyclic hydrocarbon that may include unsaturated bonds, rings, or ether linkages); amides such as dimethylformamide; dioxolanes such as 1,3-dioxolane; or sulfolanes. Among these, carbonate solvents are preferred. A mixture of a cyclic carbonate (e.g., EC or PC), which has high ionic conductivity and high dielectric constant and can improve charge-discharge performance, and a low-viscosity linear carbonate (e.g., EMC, DMC, or DEC) is more preferred. In such cases, the cyclic carbonate and the linear carbonate may be mixed at a volume ratio of about 1:1 to about 1:9, which may provide excellent electrolyte performance.

The lithium salt may be any compound capable of providing lithium ions used in the lithium secondary battery. Specific examples include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0 M. When the concentration of the lithium salt is within this range, the electrolyte may exhibit appropriate conductivity and viscosity, thereby providing excellent electrolyte performance and enabling effective lithium-ion transport.

As described above, the lithium secondary battery including the positive electrode active material according to the present invention exhibits excellent discharge capacity, output characteristics, and capacity retention, and therefore is useful for portable electronic devices such as mobile phones, notebook computers, and digital cameras, as well as electric vehicle applications such as hybrid electric vehicles (HEVs).

### [Detailed Description of Embodiments]

Hereinafter, embodiments of the present invention will be described in detail. However, these embodiments are provided for illustrative purposes only, and the present invention is not limited thereto, and is defined only by the scope of the claims described below.

### Example 1

### (1) Preparation of Positive Electrode Active Material

A precursor having a composition of Ni_{0.90}Co_{0.03}Mn_{0.07}(OH)₂ was prepared, and lithium hydroxide monohydrate (LiOH·H₂O, Samcheon Chemical, battery grade) was added thereto as a lithium raw material, and Y₂O₃, ZrO₂, and Al(OH)₃ were added as doping raw materials. These components were uniformly mixed to prepare a mixture.

At this time, the molar ratio of lithium (Li) to total metals (Me), excluding lithium (Li), was designed to be Li/Me = 1.05, and the doping raw materials were added such that, based on the precursor, the doping amounts were Zr = 2000 ppm, Y = 1200 ppm, and Al = 1000 ppm.

The mixture was placed in a calcination furnace under an oxygen atmosphere and pre-calcined at 680°C for 6.5 hours to obtain a pre-calcined material.

Thereafter, the obtained pre-calcined material was charged into a calcination furnace under an oxygen atmosphere, heated to 890°C, and calcined for 3 hours (1st step), then calcined at 940°C for 1 hour (2nd step), and subsequently calcined at 780°C for 11 hours (3rd step) in a three-step calcination process to obtain a calcined product. The calcined product was then pulverized to prepare a positive electrode active material in a single-particle form doped with Al, Y, and Zr.

### (2) Preparation of Monocell

A monocell was prepared using the positive electrode active material prepared in (1). Specifically, the positive electrode active material, a conductive agent (acetylene black), and a polyvinylidene fluoride binder (KF1120) were mixed at a weight ratio of 96.5 : 1.5 : 2. The mixture was then added to N-methyl-2-pyrrolidone (NMP) to prepare a positive electrode slurry having a solid content of about 30 wt%. The slurry was coated on an aluminum foil (Al foil, thickness: 15 µm) serving as the positive electrode current collector using a doctor blade, dried, and roll-pressed to manufacture a positive electrode.

The loading amount of the positive electrode was approximately 15-16 mg/cm², and the roll-press density was approximately 3.5 g/cm³. A monocell was manufactured using the positive electrode, a graphite negative electrode, an electrolyte, and a polypropylene separator according to conventional methods. The electrolyte was prepared by dissolving 0.7 M LiPF₆ and 0.3 M LiFSI in a mixed solvent of ethylene carbonate (EC) and ethyl methyl carbonate (EMC) at a volumetric ratio of EC:EMC = 3:7.

### Comparative Example 1

In the preparation of the positive electrode active material in (1) of Example 1, ZrO₂ and Al(OH)₃ were uniformly mixed as the doping raw materials such that, based on the precursor, Zr = 2000 ppm and Al = 1000 ppm, except that Y₂O₃ was not added. Other than this difference, the positive electrode active material was prepared in the same manner as in Example 1.

### Experimental Example 1 - Measurement of Particle Cracking Degree

The degree of particle cracking was evaluated using the positive electrodes manufactured in Example 1 and Comparative Example 1, and the results are shown in Table 1 below. Specifically, 10 g of the positive electrode active material was mixed with 3.5 g of NMP, and the mixture was cast onto a 20 µm-thick aluminum foil (Al foil) (70 mm × 210 mm) and dried at 120°C in a convection oven for 30 minutes. Another aluminum foil of the same size was placed on top of the coated foil to prepare a sample.

The sample was pressed five times at a press gauge of 0.01 mm using a roll press, and 2 g of the resulting active material particles were collected. The fine-particle generation was analyzed using a Malvern MS3000 particle size analyzer, and the degree of particle cracking was expressed as the total volume percentage (vol%) of particles having a particle size of less than 1 µm obtained from the particle size distribution results.

**[Table 1]**

| Sample | particle cracking |
|---|---|
| Example 1 | 1.85 vol% |
| Comparative Example 1 | 2.28 vol% |

Referring to Table 1, it can be seen that the positive electrode active material of Example 1, which was prepared by doping three types of doping elements, exhibits a significantly lower fine-particle generation rate compared with Comparative Example 1, in which only two types of doping elements were employed.

### Experimental Example 2 - DSC Measurement

### (1) Preparation of Coin-Type Half Cells

CR2032 coin cells were manufactured using the positive electrode active materials prepared according to the Examples and Comparative Examples, as described below. Specifically, the positive electrode active material, a conductive agent (acetylene black FX35, Denka Co.), and a polyvinylidene fluoride binder (KF9709) were mixed at weight ratios of 96.5 : 1.5 : 2 and 95 : 2.2 : 2.8, respectively. The mixture was added to N-methyl-2-pyrrolidone (NMP) to prepare a positive electrode slurry having a solid content of approximately 65 to 69 wt%.

The slurry was coated onto an aluminum foil (Al foil, thickness: 20 µm) serving as the positive electrode current collector using a doctor blade, followed by drying and roll pressing to manufacture a positive electrode. The loading amount of the positive electrode was approximately 15-16 mg/cm², and the roll-press density was approximately 3.5 g/cm³.

A 2032 coin-type half cell was assembled according to conventional methods using the positive electrode, a lithium metal negative electrode (thickness: 400 µm, NEBA), an electrolyte, and a polypropylene/polyethylene separator. The electrolyte was prepared by dissolving 1 M LiPF₆ in a mixed solvent of ethylene carbonate, dimethyl carbonate, and diethyl carbonate (EC:DMC:DEC = 1:2:1 by volume).

### (2) DSC Measurement

Differential Scanning Calorimetry (DSC) analysis was performed using the coin cells manufactured in (1). Specifically, each coin cell was charged at an initial rate of 0.1C up to 4.25 V, and the half cell was then disassembled to separately obtain the positive electrode. The obtained positive electrode was washed five times with dimethyl carbonate.

The washed electrode was impregnated with the electrolyte in a DSC crucible, and the heat flow was measured while increasing the temperature up to 350°C using a DSC instrument (DSC1 Star System, Mettler Toledo). The DSC peak temperatures obtained therefrom are shown in Table 2 below.

**[Table 2]**

| Sample | DSC peak temperature (°C) |
|---|---|
| Example 1 | 232 |
| Comparative Example 1 | 223 |

Referring to Table 2, it can be seen that the thermal stability of the positive electrode active material according to Example 1 is superior to that of the positive electrode active material of Comparative Example 1.

### Experimental Example 3 - Measurement of Capacity Retention

At 45°C, after a formation cycle performed under a constant-current/constant-current charging and discharging condition of 0.1C/0.1C within a voltage range of 2.5 to 4.25 V, constant-current charge/discharge testing was carried out at 0.5C/1C. Capacity retention was calculated based on the discharge capacity measured every 50 cycles from the 50th cycle to the 700th cycle, relative to the discharge capacity of the first cycle. The results are shown in Table 3 below.

### Experimental Example 4 - Measurement of Resistance Increase Rate

The resistance increase rate was calculated as the percentage increase in resistance measured every 50 cycles from the 50th to the 700th cycle, relative to the resistance measured during the first 0.5C charge / 1.0C discharge cycle at 45°C. The resistance (direct current internal resistance: DC-IR) was calculated by measuring the voltage 60 seconds after applying a discharge current in a 4.25 V charged state, and applying the formula (voltage before current application - voltage 60 seconds after current application) / applied current.

The results are shown in Table 3 below.

**[Table 3]**

| Cycle | Cap. retention [%] | | ΔDCIR [%] | |
|---|---|---|---|---|
| | Example 1 | Comparative Example 1 | Example 1 | Comparative Example 1 |
| 50 | 97.8 | 97.5 | 5.7 | 7.0 |
| 100 | 96.6 | 96.2 | 10.9 | 12.8 |
| 150 | 95.3 | 94.9 | 15.7 | 18.9 |
| 200 | 94.2 | 93.8 | 20.0 | 23.9 |
| 250 | 93.2 | 92.5 | 24.9 | 30.2 |
| 300 | 92.1 | 91.4 | 29.5 | 35.1 |
| 350 | 91.4 | 90.3 | 35.2 | 41.0 |
| 400 | 90.3 | 89.2 | 40.7 | 46.9 |
| 450 | 88.9 | 87.8 | 47.8 | 53.8 |
| 500 | 87.6 | 86.7 | 53.7 | 59.9 |
| 550 | 85.9 | 85.1 | 63.2 | 69.1 |
| 600 | 84.6 | 84.1 | 69.8 | 75.7 |
| 650 | 83.9 | 83.4 | 73.9 | 79.4 |
| 700 | 82.5 | 82.2 | 82.3 | 87.7 |

Referring to Table 3, it can be seen that the positive electrode active material according to Example 1 exhibits superior capacity retention and resistance characteristics compared with the positive electrode active material according to Comparative Example 1, even as the number of cycles increases.

### Example 5 - Measurement of Cation Mixing Ratio

The cation mixing ratio of the positive electrode active materials prepared in Example 1 and Comparative Example 1 was measured according to the following method. The results are shown in Table 4 below.
1. Structural analysis of the samples was performed using a SmartLab X-ray diffractometer (Rigaku).
2. Configuration of the SmartLab equipment:
   - Goniometer radius: 300.0 mm
   - Rotating anode X-ray tube (DPTA-II)
   - Theta_s arm: BB slit
   - CBO (cross beam optics for Cu target)
   - Soller slit: 5.0 degrees, 10 mm incident slit
   - Theta_d arm: 8.0 mm receiving slit
   - Diffracted beam monochromator (DBM) unit for D/teX Ultra, D/teX Ultra detector
   - Sample stage: ASC-6 (auto sample changer), reflection knife edge
3. To generate X-rays, 45 kV and 200 mA (9 kW) were applied to the Cu anode.
4. XRD measurements were performed at 10-80° with a step size of 0.02° and a scan speed of 10°/min.
5. Optic: Incident slit 1/2 deg, Receiving slit 8.0 mm
6. The cation mixing value was calculated as the Li/Ni% using Rigaku SmartLab Studio II x64 v4.2.82.0 software.
7. The calculation was performed in the software using WPPF (Whole Powder Pattern Fitting).

**[Table 4]**

| Sample | Cation mixing [%] |
|---|---|
| Example 1 | 1.1 |
| Comparative Example 1 | 1.7 |

Referring to Table 3, it can be seen that the cation mixing ratio of the positive electrode active material prepared according to Example 1 is significantly lower than that of the positive electrode active material prepared according to Comparative Example 1.

The present invention is not limited to the above-described embodiments but may be implemented in various other forms. It will be understood by those skilled in the art that various modifications can be made without departing from the spirit or essential characteristics of the present invention. Therefore, the embodiments described above are illustrative in all respects and should not be construed as limiting.

## Claims

1. A positive electrode active material for a lithium secondary battery, comprising:
a nickel-containing metal oxide in a single-particle form; and
a doping element doped into the nickel-containing metal oxide,
wherein the doping element comprises Al, Y, and Zr.

2. The positive electrode active material of claim 1,
wherein a cation mixing ratio of nickel cations in a lithium layer of a crystal structure of the doped nickel-containing metal oxide is 1.5% or less.

3. The positive electrode active material of claim 1,
wherein a content of Al is from 200 ppm to 1,800 ppm based on the nickel-containing metal oxide.

4. The positive electrode active material of claim 1,
wherein a content of Y is from 400 ppm to 2,000 ppm based on the nickel-containing metal oxide.

5. The positive electrode active material of claim 1,
wherein a content of Zr is from 1,200 ppm to 2,800 ppm based on the nickel-containing metal oxide.

6. The positive electrode active material of claim 1,
wherein a content of nickel is 0.8 mol or more based on a total of 1 mol of transition metals included in the nickel-containing metal oxide.

7. The positive electrode active material of claim 1,
wherein the nickel-containing metal oxide further comprises cobalt,
and a content of cobalt is 0.06 mol or less based on a total of 1 mol of transition metals contained in the doped nickel-containing metal oxide.

8. The positive electrode active material of claim 7,
wherein the nickel-containing metal oxide further comprises manganese,
and a content of manganese is 0.15 mol or less based on a total of 1 mol of transition metals contained in the nickel-containing metal oxide.

9. The positive electrode active material of claim 1,
wherein the nickel-containing metal oxide is represented by Chemical Formula 1 below:
[Chemical Formula 1] Liₐ[NiₓCo_{γ}Mn*z*M_{1_{W1}}M_{2_{W2}}]O₂
wherein 0.8 ≤ a ≤ 1.2, 0.8 ≤ x ≤ 0.99, 0 < y ≤ 0.06, 0 < z ≤ 0.14, 0 < w₁ ≤ 0.05, 0 ≤ w₂ ≤ 0.05, and x + y + z + w₁ + w₂ = 1, wherein M₁ is Al, Y, and Zr, and M₂ comprises one or more selected from B, Al, Mg, Ti, Nb, W, Sc, Si, V, Fe, Y, Mo, Ce, Hf, Ta, La, and Sr.

10. The positive electrode active material of claim 1,
wherein an average particle diameter (D50) of the positive electrode active material is 3 µm or more.

11. The positive electrode active material of claim 1,
wherein, when five pressurizations are performed using a roll press at a press gauge of 0.01 mm, a total amount of fine particles having a size of less than 1 µm is 2 vol% or less.

12. The positive electrode active material of claim 1,
wherein a peak temperature obtained by differential scanning calorimetry (DSC) analysis is 230°C or higher.

13. A positive electrode for a lithium secondary battery comprising the positive electrode active material according to any one of claims 1 to 12.

14. A lithium secondary battery comprising the positive electrode of claim 13.
